# EUROPEAN PATENT SPECIFICATION

(11) **EP 3 532 867 B1**
(45) Date of publication and mention of the grant of the patent: **13.04.2022**
(21) Application number: 17800574.0
(22) Date of filing: 23.10.2017
(51) Int. Cl.: G01S 19/03, G01S 19/07, G01S 5/30

(54) **OFFSHORE GNSS REFERENCE STATION APPARATUS, OFFSHORE GNSS POSITIONING SYSTEM, AND METHOD OF GENERATING POSITIONING REFERENCE DATA OFFSHORE**
GNSS-REFERENZSTATIONSVORRICHTUNG IM MEER, GNSS-POSITIONIERUNGSSYSTEM IM MEER UND VERFAHREN ZUR ERZEUGUNG VON POSITIONIERUNGSREFERENZDATEN IM MEER
APPAREIL DE TYPE STATION DE RÉFÉRENCE GNSS EN MER, SYSTÈME DE POSITIONNEMENT GNSS EN MER ET PROCÉDÉ DE GÉNÉRATION DE DONNÉES DE RÉFÉRENCE DE POSITIONNEMENT EN MER

(30) Priority: 28.10.2016 GB 201618287
(43) Date of publication of application: 04.09.2019
(73) Proprietor: Sonardyne International Limited, Yateley, Hampshire GU46 6GD (GB)
(72) Inventor: POWE, Matthew, Fleet Hampshire GU52 6AR (GB)
(74) Representative: Kay, Ross Marcel
(86) International application number: PCT/GB2017/053188
(87) International publication number: WO 2018/078342

(56) References cited:
- CN-U- 201 673 258
- KR-A- 20160 114 341
- US-A1- 2015 124 565
- CATO RYPDAL: "TRINAV EXPRESS A DGPS Positioning Reference for Deep Water Drilling Rigs", GPS 2000 - PROCEEDINGS OF THE 13TH INTERNATIONAL TECHNICAL MEETING OF THE SATELLITE DIVISION OF THE INSTITUTE OF NAVIGATION (ION GPS 2000), THE INSTITUTE OF NAVIGATION, 8551 RIXLEW LANE SUITE 360 MANASSAS, VA 20109, USA, 22 September 2000 (2000-09-22), pages 1489-1493, XP056002478,
- CHADWELL C D ET AL: "Absolute Positioning of an Autonomous Underwater Vehicle Using GPS and Acoustic Measurements", IEEE JOURNAL OF OCEANIC ENGINEERING, IEEE SERVICE CENTER, PISCATAWAY, NJ, US, vol. 30, no. 1, 1 January 2005 (2005-01-01), pages 153-164, XP011133156, ISSN: 0364-9059, DOI: 10.1109/JOE.2004.835249

## Description

The present invention relates to an offshore GNSS reference station apparatus of the type that, for example, can support geolocation offshore. The present invention also relates an offshore GNSS positioning system of the type that, for example, supports GNSS geolocation offshore. The present invention further relates to a method of generating positioning reference data offshore, the method being of the type that, for example, supports GNSS geolocation offshore.

In the field geolocation, Global Navigation Satellite Systems (GNSSs) have been developed so that the position of an individual and/or a vehicle can be determined. In such systems, geolocation devices are carried by the individual or vehicle and receive spread spectrum signals transmitted from a subset of a constellation of satellites orbiting the Earth. The signals received by the geolocation device are processed in accordance with a known technique applying unambiguous code or pseudorange observations and the principle of trilateration to determine the location of the geolocation device, thereby enabling the position of the individual or the vehicle to be determined. The intrinsic accuracy of a typical GNSS is a few metres, which is adequate for a wide variety of positioning applications. However, some applications require positioning at the decimetre or centimetre level. In this respect, so-called "GNSS augmentation" techniques exist to improve accuracy.

In this respect, for applications requiring an improved level of accuracy, a Real Time Kinematic (RTK) technique can be employed. The technique requires a land-based fixed "base station" equipped with a GNSS receiver capable of geolocation, the location of the antenna of the GNSS receiver is known. The RTK technique is based on the removal of errors common to both the roving geolocation device and the GNSS receiver of the base station. More specifically, the RTK technique uses ambiguous carrier phase observations that are orders of magnitude more precise than the technique employing unambiguous code observations mentioned above. The carrier phase and code observations associated with the base station are transmitted to the roving geolocation device, the GNSS receiver of which then processes its own observations and the received carrier phase and code observations associated with the base station and resolves the relative carrier phase ambiguities, giving centimetre accurate position of the geolocation device relative to the base station. In this respect, high precision GNSS receivers can rapidly resolve the carrier phase ambiguities, for example within one minute.

A variant of the RTK technique is known as "Network RTK" that employs multiple base stations and enables more precise modelling of distance dependent errors caused by atmospheric variation and errors in satellite orbit models broadcast by GNSS satellites. The geolocation device can therefore be supplied with optimal location-specific data, for example observations corresponding to a so-called "Virtual Reference Station" in the vicinity of the geolocation device. As such, Network RTK can be used to provide an equivalent service to that provided using the RTK technique described above, but using less base stations than a cluster of independent RTK base stations.

However, the ability to resolve carrier phase ambiguities is dependent upon the distance between a given base station or Virtual Reference Station and the geolocation device (known as a baseline). For example, where the baseline between the base station and the geolocation device exceeds about 40km, resolution of the carrier phase ambiguities can be impeded.

When the range of a geolocation device to a land-based GNSS RTK base station prevents a so-called ambiguity fixed RTK solution, the GNSS receiver of the geolocation device, if suitably equipped, can revert to employing a Differential GNSS 'float' technique, which is an order of magnitude less accurate than the ambiguity fixed RTK solution mentioned above.

Alternatively, if subscribed, the geolocation device can employ a GNSS Precise Point Positioning (PPP) technique. PPP employs a global network of land-based reference stations to compute corrections to GNSS satellite clock and orbit models (ephemeris data). The corrections are disseminated to the geolocation device, typically via satellite or internet, and applied by the GNSS receiver of the geolocation device to calculate a decimetre-level or better position of the geolocation device without the need for a GNSS base station. The PPP technique can also support the modelling and dissemination of ionospheric total electron content and tropospheric delays.

PPP requires a time to converge to decimetre accuracy, for example between about 20 and 40 minutes, in order to reduce the effects of, inter alia, local atmospheric effects and signal multipath effects. More recently, so-called "Ambiguity Resolved PPP" has demonstrated improved accuracy.

However, both PPP and Differential GNSS float positioning techniques are, in general, significantly less accurate than the "short baseline" RTK technique. In an offshore geolocation context, reverting to use of such techniques of poorer accuracy can, for example, limit survey accuracy of seafloor transponders and/or extend the duration of measurement collection.

KR20160114341A discloses a GNSS reference station comprising a GNSS receiver and a GNSS antenna.

According to a first aspect of the invention, there is provided an offshore GNSS reference station apparatus comprising: a processing resource; a wireless communications module operably coupled to the processing resource; and a GNSS antenna site; characterised by: an underwater acoustic communications unit comprising an underwater acoustic transducer, the underwater acoustic communications unit being arranged to cooperate with the processing resource in order to calculate, when in use, a position; an orientation determination unit operably coupled to the processing resource, the orientation determination unit being arranged to determine an orientation associated with the GNSS antenna site and the acoustic transducer of the underwater acoustic communications unit; the processing resource being arranged to calculate an acoustically-derived position of the GNSS antenna site using the position calculated and the orientation determined; and the wireless communications module being arranged to broadcast received GNSS observation data and the acoustically-derived position of the GNSS antenna site.

The position may be associated with a position of the GNSS antenna site.

The apparatus may further comprise: a wireless communications module operably coupled to the processing resource.

The calculated position may be a position of the underwater acoustic transducer; and the processing resource may be arranged to calculate a vector extending between the position of the underwater acoustic transducer and the position of the GNSS antenna site; the vector may be calculated using a predetermined lever arm offset and the orientation determined by the orientation determination unit.

The processing resource may be arranged to translate the position of the underwater acoustic transducer using the calculated vector in order to yield a position of the GNSS antenna site; the position of the GNSS antenna site may be a three-dimensional position of the GNSS antenna site with respect to a seabed reference frame.

The apparatus may further comprise: a GNSS receiver arranged to make GNSS signal observations comprising a pseudorange measurement and a carrier phase measurement; wherein the processing resource may be arranged to store data generated by the GNSS receiver representing the GNSS signal observations as GNSS observation data.

The GNSS signal observations may comprise a signal-to-noise ratio. The GNSS signal observations may comprise a Doppler frequency measurement.

The underwater acoustic communications unit may be arranged to make range-related measurements.

The processing resource may be arranged to modify the data generated by the GNSS receiver representing the GNSS signal observations so as to correspond to measurements made from a predetermined static pseudo-observation position, and to store the modified data as the GNSS observation data.

The predetermined static pseudo-observation position may be a centre of a predetermined area in a substantially horizontal plane.

The orientation determination unit may be an inertial measurement unit.

The inertial measurement unit may comprise an accelerometer and a gyroscope.

The orientation determination unit may be arranged to calculate the orientation of the GNSS antenna site from the GNSS observation data.

The GNSS observation data may be received from the GNSS receiver operably coupled to a first GNSS antenna and a second GNSS antenna and another GNSS receiver operably coupled to a third GNSS antenna and a fourth GNSS antenna.

The underwater acoustic transducer may be an acoustic transceiver.

The position may be an acoustically-derived position.

The processing resource may be arranged to support a reference frame translation unit; the reference frame translation unit may be arranged to receive the position and to translate the position from expression in a first reference frame to a second reference frame.

The wireless communications module may be arranged to broadcast the GNSS observation data. The wireless communications module may be arranged to broadcast the position of the GNSS antenna site.

The wireless communications module may be arranged to broadcast modified data and the predetermined static pseudo-observation position. The wireless communications module may be arranged to receive other GNSS observation data and other position data from other base stations.

The GNSS receiver may be arranged to receive precise point positioning data; and the processing resource may be arranged to support a precise point positioning processing unit; the precise point positioning processing unit may be arranged to receive the precise point positioning data and to use the precise point positioning data to calculate a GNSS-derived position of the GNSS antenna site.

The GNSS receiver may be a dual-frequency GNSS receiver.

The GNSS receiver may be arranged to receive precise point positioning data; and the processing resource may be arranged to support a precise point positioning processing unit; the precise point positioning processing unit may be arranged to receive the precise point positioning data and to use the precise point positioning data to calculate a GNSS-derived position of the GNSS antenna site; and the processing resource may be arranged to calculate an offset between the GNSS-derived position of the GNSS antenna site calculated using the precise point positioning data and the position of the GNSS antenna site.

The apparatus may further comprise a housing, the housing being arranged to support movement thereof in an aquatic environment. The housing may comprise a tether anchoring point.

The apparatus may further comprise a powered locomotion unit.

The processing resource may be arranged to estimate an average speed of sound in water, the average speed of sound being tracked over time.

The processing resource may be arranged to calculate a depth of the underwater acoustic transducer, and the processing resource may be arranged to estimate refraction corrections to the speed of sound in a water column from a predetermined approximate sound speed profile.

According to a second aspect of the invention, there is provided an offshore RTK GNSS reference station comprising the offshore GNSS reference station apparatus as set forth above in relation to the first aspect of the invention.

According to a third aspect of the invention, there is provided an offshore PPP GNSS reference station comprising the offshore GNSS reference station apparatus as set forth above in relation to the first aspect of the invention.

According to a fourth aspect of the invention, there is provided an offshore GNSS positioning system, comprising: the offshore GNSS reference station apparatus as set forth above in relation to the first aspect of the invention; and a plurality of underwater acoustic reference transponders; wherein the underwater acoustic communications unit is arranged to measure a respective two-way travel time with respect to each of the plurality of underwater acoustic reference transponders.

The plurality of underwater acoustic reference transponders may be at least four underwater acoustic reference transponders.

The plurality of underwater acoustic reference transponders may be at least six underwater acoustic reference transponders.

The processing resource may be arranged to estimate an average sound speed spatial gradient.

The offshore GNSS reference station may be arranged to maintain a position near a centre of the plurality of underwater acoustic reference transponders.

The processing resource may be arranged to cooperate with the underwater acoustic communications unit in order to estimate the position of the acoustic transducer with respect to the plurality of underwater acoustic reference transponders.

The estimated position of the acoustic transducer may be in a reference frame defined by the plurality of underwater acoustic reference transponders.

The system may further comprise: a roving GNSS apparatus arranged to receive the GNSS observation data and the position of the GNSS antenna site with respect to the reference frame defined by the plurality of subsea acoustic reference transponders; and the roving GNSS apparatus may be arranged to calculate a relative position vector associated with a position of a GNSS antenna site of the roving GNSS apparatus relative to the position of the GNSS antenna site of the GNSS reference station.

The system may further comprise: a remote processing resource arranged to receive the broadcast GNSS observation data and the broadcast position data.

The system may further comprise: another offshore GNSS reference station apparatus comprising the remote processing resource.

The system may further comprise: a land-based GNSS reference station apparatus.

The land-based GNSS reference station apparatus may comprise: the remote processing resource.

The land-based GNSS reference station apparatus may have a system-wide reference frame used thereby and the land-based GNSS reference station apparatus may be arranged to translate the position of the GNSS antenna site of the offshore GNSS reference station apparatus to the system-wide reference frame used by the land-based GNSS reference station apparatus.

The land-based GNSS reference station may have a system-wide reference frame used thereby and the offshore GNSS reference station apparatus may be arranged to translate the position of the GNSS reference antenna site of the offshore GNSS reference station apparatus to the system-wide reference frame used by the land-based GNSS reference station apparatus.

The system may further comprise: a plurality of offshore GNSS reference station apparatuses; the plurality of offshore GNSS reference station apparatuses may comprise the offshore GNSS reference station apparatus.

The plurality of offshore GNSS reference station apparatuses may have a common reference frame assigned thereto; and the offshore GNSS reference station apparatus may be arranged to translate the position of the GNSS antenna of the offshore GNSS reference station apparatus to the common reference frame assigned to the plurality of offshore GNSS reference station apparatuses.

The system may further comprise: a land-based GNSS reference station apparatus.

The plurality of offshore GNSS reference station apparatuses may comprise: at least three offshore GNSS reference station apparatuses.

The land-based GNSS reference station apparatus and the plurality of offshore GNSS reference station apparatuses together may provide at least three reference station apparatuses.

The roving GNSS apparatus may be arranged to receive transmitted GNSS observation data and transmitted antenna position data respectively from the at least three reference station apparatuses and to use the respective transmitted GNSS observation data received and the respective transmitted position data received to estimate a position of the roving GNSS apparatus.

According to a fifth aspect of the invention, there is provided a real time kinematic GNSS positioning system comprising the offshore GNSS reference station apparatus as set forth above in relation to the first aspect of the invention.

According to a sixth aspect of the invention, there is provided a real time kinematic GNSS positioning system comprising the offshore GNSS positioning system as set forth above in relation to the fourth aspect of the invention.

According to a seventh aspect of the invention, there is provided a network real time kinematic GNSS positioning system comprising the offshore GNSS reference station apparatus as set forth above in relation to the first aspect of the invention.

According to an eighth aspect of the invention, there is provided a method of generating positioning reference data offshore, the method comprising: determining a position acoustically through water; and making a GNSS observation in respect of the position; characterised by: determining an orientation associated with a GNSS antenna site and the position determined acoustically; calculating an acoustically-derived position of the GNSS antenna site using the orientation determined and the position determined acoustically; and broadcasting the GNSS observation and the acoustically-derived position.

The GNSS observation data may comprise pseudorange measurement data and a carrier phase measurement data.

The position determined acoustically through water may be determined with respect to a plurality of underwater acoustic reference transponders.

According to a ninth aspect of the invention, there is provided a method of generating a real time kinematic reference data comprising the method of generating positioning reference data offshore as set forth above in relation to the eighth aspect of the invention.

The method may further comprise: broadcasting the GNSS observation and the associated position.

The method may further comprise: generation of the GNSS observation comprises modifying the GNSS observations to correspond to measurements made from a predetermined static pseudo-observation position.

According to a tenth aspect of the invention, there is provided a method of determining a position, the method comprising: the method of generating positioning reference data offshore as set forth above in relation to the eighth aspect of the invention; broadcasting the GNSS observation and the position; receiving the broadcast GNSS observation and the broadcast position at a position to be determined; making a local GNSS observation in respect of the position to be determined; and using the received broadcast GNSS observation and the broadcast position with the local GNSS observation data to estimate a relative position vector.

According to an eleventh aspect of the invention, there is provided a method of determining a position of a subsea communications unit, the method comprising: the method of generating a real time kinematic reference signal as set forth above in relation to the eighth aspect of the invention; a GNSS rover apparatus receiving the broadcast GNSS observation and position; determining a position of the rover GNSS apparatus using the received broadcast GNSS observation and the broadcast position and a locally generated GNSS observation; and the GNSS rover apparatus performing acoustic ranging with respect to the subsea communications unit.

The method may further comprise: the GNSS rover apparatus circumnavigating one or more underwater acoustic reference transponders in accordance with a boxing-in scheme; making two-way travel time measurements respectively with respect to the one or more underwater acoustic reference transponders; and estimating an average sound speed in respect of a water column comprising the one or more underwater acoustic reference transponders.

The average sound speed may be a harmonic mean between an underwater acoustic transducer and the underwater acoustic reference transponder.

The method may further comprise: determining a spatial variation of the average sound speed using an inverted echo sounder.

The method may further comprise: accompanying the one or more underwater acoustic reference transponders with a respective number of sound speed sensors; measuring a two-way travel time between a pair of the sound speed sensors; refining the positions of an underwater reference transponder using the measured two-way travel time.

According to a twelfth aspect of the invention, there is provided a method of calculating a position of an underwater acoustic reference transponder used by an offshore GNSS reference station apparatus, the method comprising: surveying an underwater acoustic reference transponder of a plurality of underwater acoustic reference transponders using a rover GNSS apparatus in order to calculate a position of the underwater acoustic reference transponder using a first positioning technique; the offshore GNSS reference station apparatus communicating GNSS reference data and an acoustically-derived position corresponding to a position of a GNSS antenna of the offshore GNSS reference station apparatus, the acoustically-derived position being based upon respective positions of the plurality of underwater acoustic reference transponders; surveying the underwater acoustic reference transponder in order to determine an updated position of the underwater acoustic reference transponder using a second positioning technique.

The second acoustic positioning technique may be employed after the first acoustic positioning technique and the second acoustic positioning technique is a real time kinematic positioning technique.

The method may further comprise: receiving the GNSS reference data and the acoustically-derived position remotely from the offshore GNSS reference station apparatus; wherein determination of the updated position of the underwater acoustic reference transponder comprises using the received GNSS reference data and the acoustically-derived position.

The first positioning technique may be a precise point positioning technique.

The method may further comprise: providing the updated position of the underwater acoustic reference transponder to the offshore GNSS reference station apparatus.

The method may further comprise: the offshore GNSS reference station apparatus calculating the position corresponding to the GNSS antenna using the updated position of the underwater acoustic reference transponder.

The method may further comprise: calculating the updated position of the underwater acoustic reference transponder remotely from the rover GNSS apparatus.

The calculation of the updated position of the underwater acoustic reference transponder may be at a land-based processing station.

The updated position of the underwater acoustic reference transponder may be calculated at the offshore GNSS reference station apparatus.

The updated position of the underwater acoustic reference transponder may be calculated at another offshore GNSS reference station apparatus.

Surveying the underwater acoustic reference transponder may comprise calculating a plurality of two-way travel times with respect to the underwater acoustic reference transponder.

The surveying of the underwater acoustic reference transponder to determine the updated position may comprise employing a boxing-in scheme.

The plurality of underwater acoustic reference transponders may comprise another underwater acoustic transponder at a position determined using the first positioning technique; the method may further comprise: surveying the another underwater acoustic transponder in order to determine an updated position of the another underwater acoustic transponder using the second positioning technique.

Surveying the underwater acoustic reference transponder may comprise the rover GNSS apparatus following a substantially circular path about the underwater acoustic reference transponder.

Determining the updated position of the underwater acoustic reference transponder using the second positioning technique may comprise: calculating a position of the rover GNSS apparatus, an orientation of the rover GNSS apparatus and a velocity of the rover GNSS apparatus.

The method may further comprise: communicating the position calculated using the second positioning technique, the orientation of the rover GNSS apparatus and acoustic measurements made to calculate the position of the rover GNSS apparatus using the second positioning technique.

The method may further comprise: communicating GNSS observation data collected by the rover GNSS apparatus, the orientation of the rover GNSS apparatus and acoustic measurements made and associated with the GNSS observation data collected.

The updated position of the underwater acoustic reference transponder may be calculated in real time or near-real time.

Calculation of the updated position of the underwater acoustic reference transponder may be temporally deferred.

The method may further comprise: logging GNSS observation data, the orientation of the rover GNSS apparatus and acoustic measurement data associated with the rover GNSS apparatus.

The updated position of the underwater acoustic reference transponder may be a three-dimensional position.

Surveying the underwater acoustic reference transponder may comprise estimating a sound speed between a transducer of the rover GNSS apparatus and the underwater acoustic reference transponder.

The method may further comprise: using a predetermined sound speed profile to apply a refraction compensation to the estimate of sound speed.

The survey of the underwater acoustic reference transponder to determine the updated position may comprise: following a path that varies spatially with time, thereby enabling estimation of temporal and spatial variation of the speed of sound with respect to vertical distance.

The method may further comprise: determining the average sound speed independently using an inverted echo sounder.

The method may further comprise: selecting at least three of the plurality of underwater acoustic reference transponders; and using the at least three underwater acoustic reference transponders to calculate the speed of sound.

The method may further comprise: selecting at least six of the plurality of underwater acoustic reference transponders; and using the at least six underwater acoustic reference transponders to calculate the speed of sound.

The method may further comprise: another rover GNSS apparatus surveying the underwater acoustic reference transponder in order to determine the updated position of the underwater acoustic reference transponder using the second positioning technique.

The method may further comprise: using the updated position of the underwater acoustic reference transponder determined using the rover GNSS apparatus and the updated position of the underwater acoustic reference transponder determined using the another rover GNSS apparatus to calculate an average updated position of the underwater acoustic reference transponder.

According to a thirteenth aspect of the invention, there is provided a transponder position determination system comprising: an offshore rover GNSS apparatus; an offshore GNSS reference station apparatus; and a plurality of underwater acoustic reference transponders comprising an underwater acoustic reference transponder having a known position determined using a first positioning technique; wherein the underwater acoustic reference transponder is arranged to communicate acoustically with the offshore rover GNSS apparatus and the offshore GNSS reference station apparatus; the offshore GNSS reference station apparatus is arranged to communicate GNSS reference data and an acoustically-derived position corresponding to a position of a GNSS antenna of the offshore GNSS reference station apparatus and an orientation associated with the GNSS antenna, the acoustically-derived position being based upon respective positions of the plurality of underwater acoustic reference transponders; and the rover GNSS apparatus is arranged to survey the underwater acoustic reference transponder in order to determine an updated position of the underwater acoustic reference transponder using a second positioning technique.

It is thus possible to provide an apparatus and method capable of supporting GNSS positioning offshore with improved accuracy over existing systems and reduced time to convergence by the apparatus to centimetre accuracy. Indeed, for hydrocarbon fields and sites (and other applications), it is possible to maintain a GNSS reference capability over the life of the field. It is also possible to position an array of reference beacons well away from an area of a site that is subject to settlement and to transfer accurate three-dimensional positioning to the site subject to settlement. Additionally, low cost beacons can be employed, which can be replaced on a regular basis, if required. The apparatus and method also allows subsea positioning to be achieved at a lower cost and more accurately than other known systems, for example so-called underwater GNSS (GPS) systems. It is further possible to augment or extend existing PPP and RTK systems using the method and apparatus.

At least one embodiment of the invention will now be described, by way of example only, with reference to the accompanying drawings, in which:
**Figure** 1 is a schematic diagram of an offshore reference station system comprising an offshore GNSS reference station apparatus and constituting an embodiment of the invention;
**Figure** 2 is a schematic diagram of a flow diagram of a method of generating positioning reference data constituting another embodiment of the invention;
**Figure** 3 is a schematic diagram of a rover vessel constituting a further embodiment of the invention;
**Figure 4** is a schematic diagram of an offshore positioning system;
**Figure** 5 is a flow diagram of a method of determining a position employing the system of Figure 4; and
**Figure** 6 is a schematic diagram of a network of base stations in a positioning system and constituting a further embodiment of the invention.

Throughout the following description identical reference numerals will be used to identify like parts.

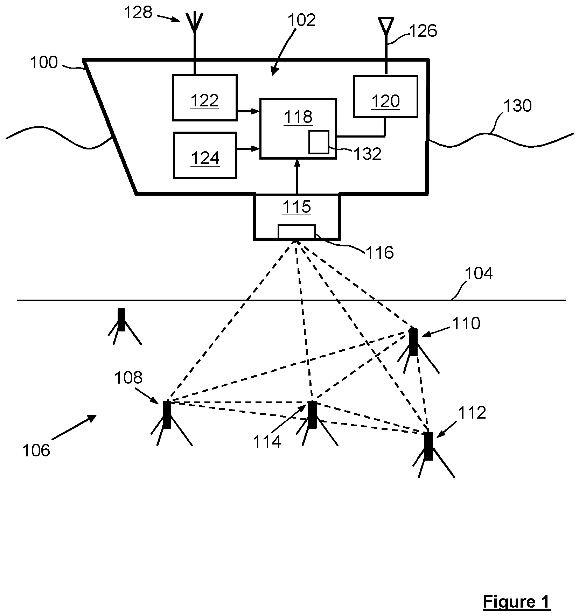

Referring to Figure 1, a vessel 100 comprises an offshore GNSS reference station apparatus 102. In this example, the vessel 100 is a ship, but the skilled person should appreciate that the vessel need not be limited to the ship and that other vessels can be employed. In this regard, instead of the vessel, the offshore GNSS reference station can comprise a housing capable of supporting movement thereof in an aquatic environment. Indeed, the offshore GNSS reference station apparatus 102 can comprise any suitable vessel capable of carrying the offshore GNSS reference station apparatus 102 in an aquatic environment, for example a watertight housing that is buoyant. In some examples, the vessel 100 can be tethered to a sea floor 104. In such examples, the housing can comprise a tether anchoring point. In other embodiments, the offshore GNSS reference station apparatus 102 is powered by a locomotion unit, for example a form of propulsion and/or steering, such as an engine or electrically powered motor coupled to suitable steering resources.

An offshore reference system comprises the offshore GNSS reference station apparatus 102 and a plurality of subsea acoustic reference transponders 106 that are disposed on the sea floor 104, for example at least four transponders, such as at least six transponders. In this example, a first seabed acoustic transponder 108, a second seabed acoustic transponder 110, a third seabed acoustic transponder 112 and a fourth seabed acoustic transponder 114. The plurality of subsea acoustic reference transponders 106 disposed on the sea floor or seabed 104 are disposed in spaced relation to each other and are within communications range of the vessel 100. The plurality of subsea acoustic reference transponders 106 constitute a network of transponders and reside in a plane of reference, hereinafter referred to as a seabed reference frame.

The offshore GNSS reference station apparatus 102 comprises a first underwater acoustic communications unit 115 comprising a first acoustic transducer, for example a first acoustic transceiver 116, capable of communicating with the plurality of subsea acoustic reference transponders 106. The first acoustic transceiver 116 is operably coupled to a first processing resource 118, the first processing resource 118 supporting a reference frame translation unit 132. The first processing resource 118 is operably coupled to a first wireless communications module 120, a GNSS receiver 122 and a first orientation determination unit, for example, a first inertial measurement unit 124, which comprises in this example an accelerometer and a gyroscope. In this example, the GNSS receiver 122 is a single frequency GNSS receiver. However, in other examples, a dual frequency GNSS receiver can be employed. It should be appreciated that the first processing resource 118 can be distributed in nature and can encompass the processing capabilities of the GNSS receiver 122.

The first communications module 120 is operably coupled to a first communications antenna 126 for RF communications. In this example, the first communications module 120 comprises components and logic to support broadcast of position-related data in accordance with one or more of the RTCM SC-104 standards. The GNSS receiver 122 is operably coupled to a first GNSS antenna 128 disposed at a first antenna site (not shown) on the vessel 100. As will be appreciated, a relative positional relationship exists between the first antenna site and the first acoustic transceiver 116 and this is known as the so-called lever arm, which is a translation describing the difference in position of the first antenna site and the first acoustic transceiver 116.

The first inertial measurement unit 124 is provided to calculate the orientation of the lever arm between the first antenna site and the first acoustic transceiver 116. In this respect, the orientation is associated with the first antenna site and the first acoustic transducer 116. In some embodiments, the orientation of the first antenna site can be determined alternatively by employing a first GNSS receiver and a second GNSS receiver (not shown), the first GNSS receiver being operably coupled to a first GNSS antenna (not shown) and a second GNSS antenna (not shown), and the second GNSS receiver being operably coupled to a third GNSS antenna (not shown) and a fourth GNSS antenna (not shown). In this regard, the first, second, third and fourth GNSS antennas are disposed in spaced relation. In such an example, the first orientation determination unit receives GNSS observation data from the first and second GNSS receivers and determines the orientation of the first antenna site using the GNSS observation data received. Although four GNSS antennas have been employed in this example, the skilled person should appreciate that orientation can be determined using GNSS signals received by three antennas.

As mentioned above, the vessel 100 is an offshore vessel and so is disposed in a body of water, for example the sea 130 and, indeed, in this example, the vessel 100 floats on the sea surface.

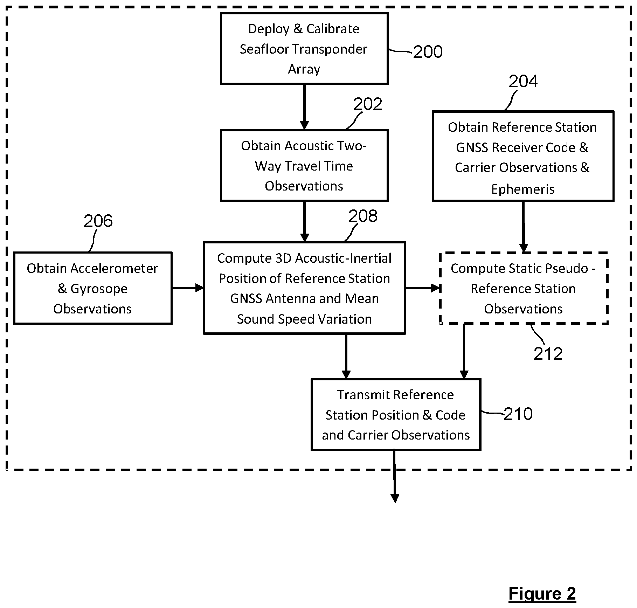

In operation (Figure 2), the vessel 100 is deployed in the body of water, for example at sea, and is positioned above the plurality of subsea acoustic reference transponders 106, which are calibrated (Step 200). This initial calibration involves conventional boxing-in of each transponder, or any other suitable pattern, to determine transponder coordinates, using acoustic range and GNSS PPP observations (real time or post processed) by a surface vessel and may include transponder to transponder acoustic ranging (Figure 1). The offshore GNSS reference station apparatus 102 needs to be in communications range of at least four of the plurality of subsea acoustic reference transponders 106. The plurality of subsea acoustic reference transponders 106 can be specifically deployed for the purpose of serving the offshore GNSS reference station apparatus 102 as part of the GNSS offshore reference system or can be deployed for other purposes, for example for other subsea applications, but capable of communicating acoustically with the offshore GNSS reference station apparatus 102. Nevertheless, the offshore GNSS reference system comprises the sea floor transponders, irrespective of initial purpose.

The first processing resource 118 instructs the first acoustic transceiver 116 to interrogate the plurality of subsea acoustic reference transponders 106 and each of the subsea acoustic reference transponders 106 respectively transmits a reply to the first acoustic transceiver 116. The underwater acoustic communication unit 115 operates internal clocks in order to determine times of flight and calculate two-way travel times (Step 202) taking into account turnaround times of the reference transponders. Any suitable technique for determining ranges can then be employed in order to determine individual ranges from the first acoustic transceiver 116 to each of the plurality of subsea acoustic reference transponders 106 that reply to an interrogation signal transmitted by the first acoustic transceiver 116. Using known processing techniques, the first processing resource 118 calculates the position of the first acoustic transceiver 116 within the reference frame defined by the plurality of subsea acoustic reference transponders 106 and thus the position of the first acoustic transducer 116 is calculated with respect to the plurality of subsea acoustic reference transponders 106. As the techniques employed are not key to an understanding of the inventive concepts exemplified herein, the processing to determine location of the first acoustic transceiver 116 in the subsea reference transponder reference frame will not be described further.

At the same time, the first processing resource 118 obtains (Step 204) GNSS data from the GNSS receiver 122. The GNSS data comprises signal observation data, for example a pseudorange measurement and a carrier phase measurement. The GNSS data can comprise other signal observations, for example a signal-to-noise ratio and/or a Doppler frequency measurement.

Additionally, the first inertial measurement unit 124 obtains (Step 206) a measure of the orientation of the vessel 100 and hence the orientation of the first antenna site and the orientation of the first acoustic transceiver 116 at the time of making the acoustic measurements and obtaining the GNSS data.

The lever arm between the first antenna site and the first acoustic transceiver 116 is known as this is a fixed relationship between the two entities and so this a priori information is stored as a parameter for use by the first processing resource 118. Should the a priori information be unavailable, it should be appreciated that the lever arm can be determined using any suitable post-processing technique, for example using an appropriately designed method. Hence, the position of the first acoustic transceiver 116 is associated with the position of the first antenna site. Using the measure of orientation obtained and the known lever arm, the first processing resource 118 calculates a vector between the position of the first acoustic transceiver 116 and the position of the first antenna site so that the position of the antenna site can be determined in the reference frame of the plurality of subsea acoustic reference transponders 106 (Step 208). In another example, if enabled, the reference frame translation unit 132 then transforms (Step 208) the position of the antenna expressed in the reference frame of the plurality of subsea acoustic reference transponders 106 to a position expressed in a second reference frame, for example the International Terrestrial Reference Frame (ITRF). This is an example of the reference frame translation unit 132 translating of an acoustically-derived position from expression in a first reference frame to a second reference frame. The translation, for example a coordinate vector, to translate from the acoustic reference frame to the ITRF can be obtained as the average difference between acoustically-derived and PPP GNSS positions (real time or post processed, for example using so-called final orbit products available from the International GNSS Service (IGS)) observed over a sustained period, for example one day. The acoustically-derived position of the first antenna site is a three-dimensional position of the first antenna site with respect to a seabed reference frame.

The GNSS data obtained from the GNSS receiver 122 is communicated to the first wireless communications module 120 along with the acoustically-derived position of the GNSS antenna site and the first wireless communications module 120 broadcasts (Step 210) the GNSS observation data and the acoustically-derived position of the GNSS antenna site, which can be used by other offshore geolocation hardware employing differential GNSS principles.

In order to improve accuracy of the acoustically-derived position of the GNSS antenna site, the first processing resource 118, in this example, estimates a speed of sound in water, for example an average speed of sound (Step 208). In this regard, the first processing resource 118 maintains a record of the calculated speeds of sound in order to track changes in speed of sound over time. The tracked sound speed data can be used to improve accuracy when determining the height of the first acoustic transceiver 116 above the sea floor 104, i.e. the depth of the first acoustic transducer 116. In this respect, as the average sound speed in water varies over time, the calculated height of the first acoustic transducer reduces in accuracy as the average sound speed varies. In addition to estimating the temporal variation of average sound speed, the first processing resource 118 can estimate the spatial variation of average sound speed to improve accuracy further. The spatial variation can be modelled, for example, by using average sound speed gradients with respect to the relative North and East coordinates of the seabed transponders.

The geometry of the first acoustic transceiver 116 with respect to the plurality of subsea acoustic reference transponders 106 is such that average sound speed and vessel depth can be distinctly estimated, because there is significant variation in the angles between transceiver-transponder vectors and the vertical. The average (harmonic mean) sound speed estimate relates to an acoustic signal travelling vertically to a reference depth and is the geometric (straight line) range divided by the one-way travel time. The sound speed estimation process compensates for variation in depths of the subsea acoustic reference transponders 106 from a nominal depth and compensates for refraction of the acoustic path caused by the horizontal displacement of each of the plurality of subsea acoustic reference transponders 106 relative to the first acoustic transceiver 116. The depth variation and refraction corrections to sound speed are small, for example typically a few centimetres per second, and can be estimated from an approximate sound speed profile, for example from a world ocean model. The continuous estimation of average sound speed ensures that a three-dimensional position estimate, most notably the vertical estimate (which is otherwise highly correlated with sound speed), is independent of sound speed variation. With six or more subsea acoustic reference transponders, the spatial gradient of average sound speed variation can also be continuously estimated.

Using a predetermined approximate sound speed profile, depth variations and refraction corrections to the speed of sound in a water column are estimated by the first processing resource 118.

When available to the offshore GNSS reference station apparatus 102, the first communications module 120 can receive, in this example, other GNSS observation data and other position data from base stations in a network of a positioning system. Likewise, the GNSS receiver 122 can receive precise point positioning data. In such examples, the first processing resource 118 supports a precise point positioning processing unit (not shown), the precise point positioning processing unit being arranged to receive the precise point positioning data and to use the precise point positioning data to calculate a GNSS-derived position of the GNSS antenna site.

As mentioned above, the use of the offshore GNSS reference station apparatus 102 with the plurality of subsea acoustic reference transponders 106 constitutes an offshore reference system. The offshore GNSS reference station apparatus 102 can serve as an offshore RTK GNSS reference station, or an offshore PPP GNSS reference station.

In another embodiment, if required, the first processing resource 118 can modify (Step 212) the GNSS data generated by the GNSS receiver 122 representing the GNSS signal observations so as to correspond to measurements made from a predetermined static pseudo-observation position. The modified data can be stored as the GNSS observation data. For example, the predetermined static pseudo-observation position can be a centre of a predetermined area in a substantially horizontal plane. When this is done, the wireless communications module 120 broadcasts (Step 210) modified data and the predetermined static pseudo-observation position. The broadcast therefore does not require continuous updates of the acoustically-derived position of the offshore GNSS reference station apparatus 102 to accompany broadcasts of the GNSS data, and the offshore GNSS reference station apparatus 102 can be used in a like manner to a conventional land-based GNSS reference station.

In a further embodiment, if equipped with the locomotion unit described above, the offshore GNSS reference station apparatus 102 can maintain a position near a centre of the plurality of subsea acoustic reference transponders 106. Maintaining the position of the offshore GNSS reference station apparatus 102 constrains the positioning error of the acoustically-derived position of the GNSS antenna site caused by errors in the initial calibration of the plurality of subsea acoustic reference transponders 106.

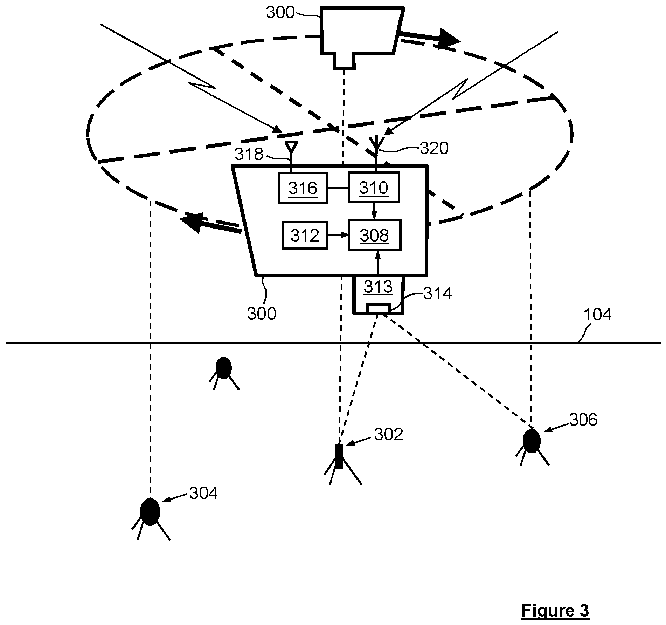

In another embodiment (Figure 3), a seafaring rover vessel 300 is disposed at sea or in another appropriate body of water and is capable of translating above (not necessarily directly) a deployed sea floor transponder 302, for example a transponder the position of which needs to be determined accurately. The seafaring rover vessel 300 can be, for example, an unmanned propelled surface vehicle, for example a so-called wave glider, a manned vehicle, for example a survey ship or drilling rig, or a tethered vessel, for example a buoy. In addition to the transponder 302 being deployed on the sea floor 104, other apparatus can also be deployed on the sea floor 104, for example a first inverted echo sounder 304 and a second inverted echo sounder 306.

The rover vessel 300 comprises a second processing resource 308 operably coupled to another GNSS receiver 310 and a second orientation determination unit, for example, a second inertial measurement unit 312. It should be appreciated that the second processing resource 308 can be distributed in nature and can encompass the processing capabilities of the other GNSS receiver 310. In this example, the other GNSS receiver 310 is a single frequency GNSS receiver. However, in other examples, a dual frequency GNSS receiver can be employed. The rover vessel 300 also comprises a second underwater acoustic communications unit 313 comprising a second acoustic transducer, for example a second acoustic transceiver 314, capable of communicating with the deployed sea floor transponder 302 and the first and second inverted echo sounders 304, 306. The second acoustic transceiver 314 is operably coupled to the second processing resource 308.

A second communications module 316 is operably coupled to a second communications antenna 318 for RF communications, the communications module 316 also being operably coupled to the other GNSS receiver 310. In this example, the second communications module 316 comprises components and logic to support broadcast position data in accordance with one or more of the RTCM SC-104 standards. The other GNSS receiver 310 is operably coupled to another GNSS antenna 320 disposed at a second antenna site (not shown) on the rover vessel 300. As will be appreciated, a relative positional relationship also exists between the second antenna site and the second acoustic transceiver 314 and this is known as the so-called level arm, which in this example is a translation or offset describing the difference in position of the second antenna site and the second acoustic transceiver 314.

The second inertial measurement unit 312 is provided to calculate the orientation of the lever arm between the second antenna site and the second acoustic transceiver 314. In some embodiments, the orientation of the antenna site can be determined alternatively by employing multiple GNSS receivers and multiple GNSS antennae as described above in relation to the offshore GNSS reference station apparatus 102.

In this example, the rover vessel 300 has a propulsion system so that it can translate across the sea surface in accordance with a survey path.

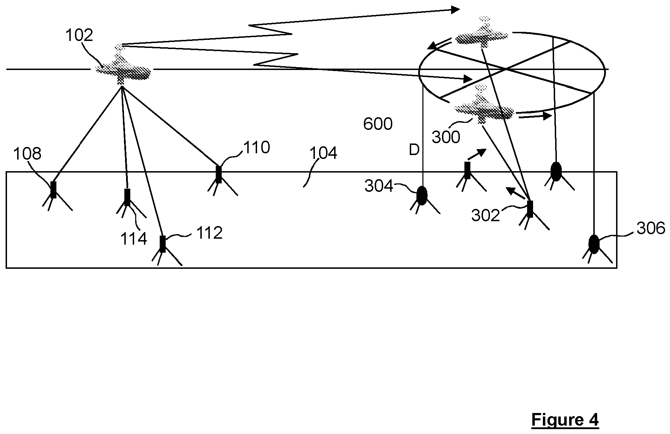

Referring to Figure 4, in an embodiment relating to an offshore positioning system combining the use of the offshore GNSS reference station apparatus 102 and the rover vessel 300, the rover vessel 300 is located offshore within, for example, a 30km radius of the offshore reference station apparatus 102. As described in the previous examples, the offshore GNSS acoustic reference station apparatus 102 is capable of communicating acoustically with the first seabed acoustic transponder 108, the second seabed acoustic transponder 110, the third seabed acoustic transponder 112 and the fourth seabed acoustic transponder 114. Similarly, the rover vessel 300 is capable of communicating acoustically with the deployed sea floor transponder 302, for example the transponder the position of which needs to be determined accurately, and the first inverted echo sounder 304 and the second inverted echo sounder 306.

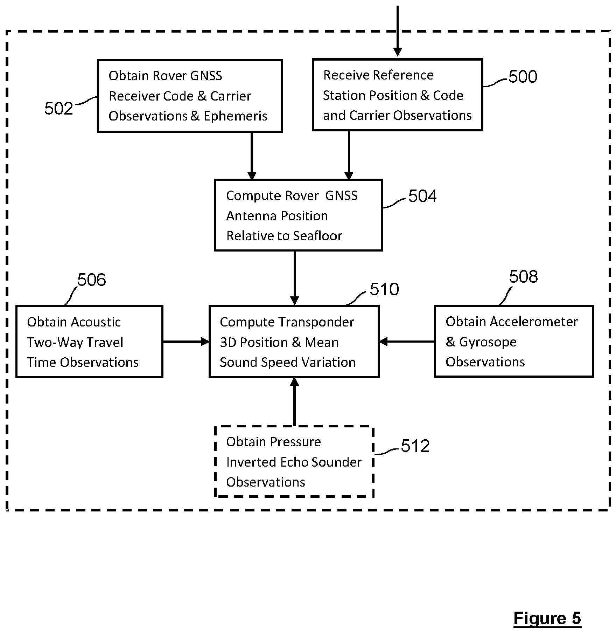

In operation (Figure 5), the rover vessel 300 operates in combination with the offshore GNSS reference station apparatus 102 described above. The offshore GNSS reference station apparatus 102 determines the acoustically-derived position and obtains the associated GNSS observation data, which is broadcast, as already described above in relation to a previous example.

At the rover vessel 300, the second communications module 316 of the rover vessel 300 receives (Step 500) the acoustically-derived position data and the GNSS observation data broadcast from the offshore GNSS reference station apparatus 102. The another GNSS receiver 310 of the rover vessel 300 also obtains (Step 502) further GNSS observation data comprising a further pseudorange measurement and a further carrier phase measurement from the GNSS satellite network orbiting the Earth, i.e. a local GNSS observation.

Using the information received by the second communications module 316 from the offshore GNSS reference station apparatus 102 and the information obtained from the another GNSS receiver 310, the second processing resource 308 calculates (Step 504) a position of the second antenna site where the another GNSS antenna 320 is disposed with respect to the seabed reference frame used by the offshore GNSS reference station apparatus 102 using differential GNSS, for example RTK, computation technique. In this respect, the second processing resource 308 is arranged to calculate a relative position vector associated with the position of the second GNSS antenna site relative to the position of the first antenna site of the offshore GNSS reference station apparatus 102.

As mentioned above, the rover vessel 300 communicates with the deployed sea floor transponder 302, the position of which needs to be determined accurately. The second acoustic transceiver 314 communicates acoustically with the transponder 302 in order to obtain (Step 506) two-way travel time observations that are communicated to the second processing resource 308. The second processing resource 308 also obtains (Step 508) the calculated orientation of the lever arm between the second antenna site and the second acoustic transceiver 314. Using the orientation data and the two-way travel time data obtained, the second processing resource 308 calculates (Step 510) a position in three dimensions of the sea floor transponder 302 in the reference frame used by the offshore GNSS reference station apparatus 102.

Where one or more subsea acoustic reference beacons are available, the rover vessel 300 can navigate within the area of one or more subsea acoustic reference beacons according to a boxing-in of each transponder or any other suitable pattern. The second underwater acoustic communications unit 313 cooperates with the second processing resource 308 of the rover vessel 300 in order to make two-way travel time measurements with respect to the one or more subsea acoustic reference beacons. As part of a process of computing ranging data from the measured two-way travel time, the average sound speed in respect of the water column is estimated (Step 510), the water column comprising the one or more subsea acoustic reference beacons. In this example, the average sound speed is a harmonic mean between the second acoustic transceiver 314 and the transponder 302. An average sound speed model can be augmented through further estimation of spatial and temporal average sound speed gradients.

Alternatively, by communicating with one or both of the first inverted echo sounder 304 and the second inverted echo sounder 306, the second underwater acoustic communications unit 313 is able to make (Step 512) pressure inverted echo sounder observations, which can be used by the second processing resource 308 to calculate (Step 510) spatial sound speed variation data mentioned above.

In another example, the one or more subsea acoustic reference beacons can be provided with or accompanied by a respective number of sound speed sensors, which can, as pairs, estimate distances therebetween, from measured two-way travel times therebetween, in order to refine a measurement of the position of the sea floor transponder 302.

Although, in the above example, a single rover vessel 300 has been employed, the skilled person should appreciate that multiple rover vessels can be employed and their data collated to determine the position in three dimensions of the one or more subsea acoustic reference transponders mentioned above.

The GNSS reference station apparatus 102 can be employed in any suitable RTK GNSS positioning system. Likewise, a GNSS positioning system comprising the GNSS reference station apparatus 102 and the plurality of subsea acoustic reference transponders 106 can likewise be employed in any suitable RTK GNSS positioning system.

In another example, one or more rover vessels 300 can be employed to survey the plurality of subsea acoustic reference transponders 106 in order to refine the initial calibration coordinates mentioned above (Step 200).

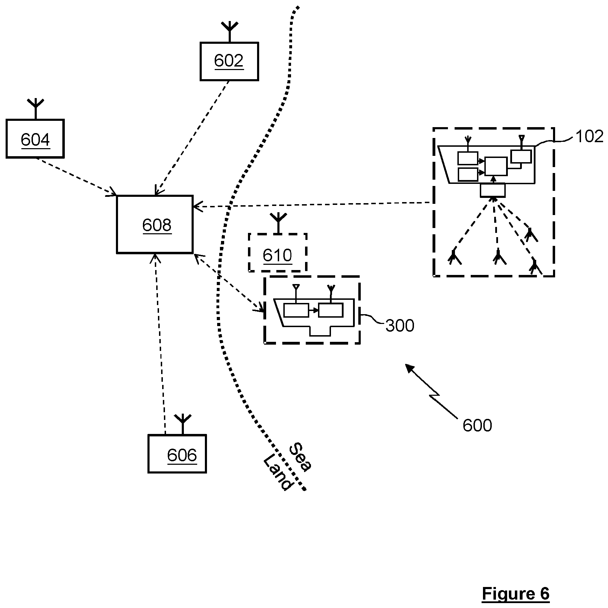

In another embodiment (Figure 6), a network of base stations 600 can be provided. For example, the network can comprise the offshore GNSS reference station apparatus 102, a first land-based GNSS reference station 602, a second land-based GNSS reference station 604, and a third land-based GNSS reference station 606. In this example, the first, second and third land-based GNSS reference stations 602, 604, 606 are conventional GNSS reference stations used in GNSS RTK geolocation networks. The land-based reference stations 602, 604, 606 employ a predetermined system-wide reference frame, for example the European Terrestrial Reference Frame (ETRF). A central processing resource 608 is also located on land and capable of receiving GNSS observation data broadcast by any of the first, second and third land-based GNSS reference stations 602, 604, 606, and/or the offshore GNSS reference station apparatus 102. The central processing resource 608 is also capable of communicating with the rover vessel 300.

The first processing resource 118 of the offshore GNSS reference station apparatus 102 is arranged to translate the position of the first antenna site, for example a pseudo-static observation position, to the system-wide reference frame used by the land-based reference stations 602, 604, 606. The reference frame of the position of the first antenna site is translated prior to broadcast of the acoustically-derived position of the first antenna site. Alternatively, where the central processing resource 608 is located on land, for example at one of the land-based reference stations, the central processing resource 608 is arranged to receive the position data for the first antenna site of, and broadcast by, the offshore GNSS reference station apparatus 102 and translate the position data from the seabed reference frame in which it is expressed to the system-wide reference frame of the land-based reference stations 602, 604, 606. Although pseudo-static observation positions are described as used in this example, the skilled person should appreciate that the use of observation positions, for example acoustically-derived positions, which change with time is contemplated and not precluded from use in an appropriately configured geolocation network.

In common with other GNSS RTK geolocation networks, in this example, the GNSS RTK network 600 supports Virtual Reference Station (VRS) functionality by which the GNSS reference stations are in communication with the central processing resource 608 and the central processing resource 608 can create a VRS 610 situated in the vicinity of the rover vessel 300, or any other rover vessel as necessary. This functionality can be optional to improve accuracy, depending upon application requirements.

In operation, the network of base stations 600 operate to provide a differential GNSS service to the rover vessel 300 so that the position of the rover vessel 300 can be determined with improved accuracy in an offshore environment. The land-based reference stations 602, 604, 606 can be of use when the rover vessel 300 is sufficiently close to the shore where one or more land-based reference station is located, in this example.

Although, in this example, the majority of GNSS reference stations are located onshore, it should be appreciated that in other suitable examples, the GNSS RTK network 600 requires at least three reference stations and these can be a mixture of land-based and offshore GNSS reference station apparatuses or exclusively at least three offshore GNSS reference stations, for example like the offshore GNSS reference station apparatus 102. In the example of the exclusive use of the offshore GNSS reference stations, a common reference frame can be assigned to the plurality of offshore GNSS reference stations, comprising the offshore GNSS reference station apparatus 102, and the offshore GNSS reference station apparatus 102 can be arranged to translate the acoustically-derived position of the first antenna site of the offshore GNSS reference station apparatus 102 to the common reference frame assigned to the plurality of offshore reference stations. Even in such an example, a land-based reference station can participate in the network comprising the plurality of offshore GNSS reference stations.

In relation to the determination of the position of the rover vessel 300, the rover vessel 300 receives transmitted GNSS observation data and transmitted antenna position data from the at least three reference stations mentioned above. The second processing resource 308 of the rover vessel 300 uses the respective transmitted GNSS observation data received and the respective position data received in order to estimate a position of the second antenna site of the rover vessel 300 using the so-called Master Auxiliary Concept (MAC).

With regard to the central processing resource 608, although the central processing resource 608 is, in this example, independent of the GNSS reference stations and located on land, the skilled person should appreciate that the central processing resource 608 can alternatively be located offshore and/or co-located with one of the GNSS reference stations, for example the offshore GNSS reference station apparatus 102 or another offshore GNSS reference station apparatus (not shown). In this respect, the central processing resource constitutes a remote processing resource and can be arranged to broadcast GNSS observation data and antenna position data, which can correspond to VRS data, a single reference station or multiple reference stations using the Master Auxiliary concept.

The skilled person should appreciate that the above-described implementations are merely examples of the various implementations that are conceivable within the scope of the appended claims. Indeed, for example, although the use of the VRS 610 has been described herein, the network of base station 600 or the GNSS positioning system can additionally or alternatively, support the so-called Nearest Reference Station and/or Master-Auxiliary functionality.

The above example apparatus, systems, networks and methods have numerous applications. For example, the one or more subsea acoustic reference transponders can be used to monitor plate tectonics. For such an implementation, a first subsea acoustic reference transponder can be disposed on the seabed on one side of a fault line and a second subsea reference transponder can be disposed on the other side of the fault line. The movement of the first and second acoustic reference transponders relative to each other can be monitored using one or more rover vessel. In another application, an array of subsea acoustic transponders can be monitored by one or more rover vessels in order to determine a state of a hydrocarbon field in relation to movement of the seabed. In this regard, the monitoring of the seabed can be required from field exploration to development, production, decommissioning of a field. Indeed, if the field is subsequently to be re-used as a site for carbon sequestration, further monitoring of the field can be required. It therefore follows that at different stages in, for example, oilfield development there is a need for accurate positioning topside and near the seabed in particular areas. One further example is the tying-in of pipelines to subsea assets. Additionally, the above-described examples can be used for (routine) pipeline inspection. It should be appreciated that these application are set out herein by way of example only and are representative of a large number of possible applications for the methods and apparatus described herein.

The apparatus, systems and methods of the above embodiments may be implemented in a computer system (in particular in computer hardware or in computer software) or in specifically manufactured or adapted integrated circuits, in addition to the structural components and user interactions described.

The methods of the above embodiments may be provided as computer programs or as computer program products or computer readable media carrying a computer program which is arranged, when run on a computer or other processor, to perform the method(s) described above.

Alternative embodiments of the invention can be implemented as a computer program product for use with a computer system, the computer program product being, for example, a series of computer instructions stored on a tangible data recording medium, such as a diskette, CD-ROM, ROM, or fixed disk, or embodied in a computer data signal, the signal being transmitted over a tangible medium or a wireless medium, for example, microwave or infrared. The series of computer instructions can constitute all or part of the functionality described above, and can also be stored in any memory device, volatile or nonvolatile, such as semiconductor, magnetic, optical or other memory device.

## Claims

1. An offshore GNSS reference station apparatus (102) comprising:
a processing resource (118);
a wireless communications module (120) operably coupled to the processing resource (118); and
a GNSS antenna site; **characterised by**
an underwater acoustic communications unit (115) comprising an underwater acoustic transducer (116), the underwater acoustic communications unit (115) being arranged to cooperate with the processing resource (118) in order to calculate, when in use, a position;
an orientation determination unit (124) operably coupled to the processing resource (118), the orientation determination unit (124) being arranged to determine an orientation associated with the GNSS antenna (128) site and the acoustic transducer (116) of the underwater acoustic communications unit (115);
the processing resource (118) being arranged to calculate an acoustically-derived position of the GNSS antenna site using the position calculated and the orientation determined; and
the wireless communications module (120) being arranged to broadcast received GNSS observation data and the acoustically-derived position of the GNSS antenna site.

2. An apparatus as claimed in Claim 1, wherein
the calculated position is a position of the underwater acoustic transducer (116); and
the processing resource (118) is arranged to calculate a vector extending between the position of the underwater acoustic transducer (116) and the position of the GNSS antenna (128) site, the vector being calculated using a predetermined lever arm offset and the orientation determined by the orientation determination unit (124).

3. An apparatus as claimed in Claim 2, wherein the processing resource (118) is arranged to translate the position of the underwater acoustic transducer (116) using the calculated vector in order to yield a position of the GNSS antenna (128) site, the position of the GNSS antenna (128) site being a three-dimensional position of the GNSS antenna (128) site with respect to a seabed reference frame.

4. An apparatus as claimed in any one of the preceding claims, further comprising:
a GNSS receiver (122) arranged to make GNSS signal observations comprising a pseudorange measurement and a carrier phase measurement; wherein
the processing resource (118) is arranged to store data generated by the GNSS receiver (122) representing the GNSS signal observations as GNSS observation data.

5. An apparatus as claimed in Claim 4, wherein the processing resource (118) is arranged to modify the data generated by the GNSS receiver (122) representing the GNSS signal observations so as to correspond to measurements made from a predetermined static pseudo-observation position, and to store the modified data as the GNSS observation data.

6. An apparatus as claimed in Claim 4, when dependent upon Claim 2, wherein
the wireless communications module (120) is arranged to broadcast the GNSS observation data.

7. An apparatus as claimed in Claim 5, wherein
the wireless communications module (120) is arranged to broadcast modified data and the predetermined static pseudo-observation position.

8. An apparatus as claimed in Claim 4, wherein
the GNSS receiver (122) is arranged to receive precise point positioning data; and
the processing resource (118) is arranged to support a precise point positioning processing unit, the precise point positioning processing unit being arranged to receive the precise point positioning data and to use the precise point positioning data to calculate a GNSS-derived position of the GNSS antenna (128) site.

9. An apparatus as claimed in Claim 4, wherein
the GNSS receiver (122) is arranged to receive precise point positioning data;
the processing resource (118) is arranged to support a precise point positioning processing unit, the precise point positioning processing unit being arranged to receive the precise point positioning data and to use the precise point positioning data to calculate a GNSS-derived position of the GNSS antenna (128) site; and
the processing resource (118) is arranged to calculate an offset between the GNSS-derived position of the GNSS antenna (128) site calculated using the precise point positioning data and the position of the GNSS antenna (128) site.

10. An offshore GNSS positioning system, comprising:
the offshore GNSS reference station apparatus (102) as claimed in any one of Claims 1 to 9; and
a plurality of underwater acoustic reference transponders (106); wherein
the underwater acoustic communications unit (115) is arranged to measure a respective two-way travel time with respect to each of the plurality of underwater acoustic reference transponders (106).

11. A system as claimed in Claim 10, wherein the processing resource (118) is arranged to cooperate with the underwater acoustic communications unit (115) in order to estimate the position of the acoustic transducer (115) with respect to the plurality of underwater acoustic reference transponders (106).

12. A system as claimed in Claim 10, further comprising:
a roving GNSS apparatus (300) arranged to receive the GNSS observation data and the position of the GNSS antenna site with respect to the reference frame defined by the plurality of subsea acoustic reference transponders (106); and
the roving GNSS apparatus (300) is arranged to calculate a relative position vector associated with a position of a GNSS antenna (320) site of the roving GNSS apparatus (300) relative to the position of the GNSS antenna (320) site of the GNSS reference station (102).

13. A method of generating positioning reference data offshore, the method comprising:
determining (200) a position acoustically through water; and
making a GNSS observation (204) in respect of the position; **characterised by**:
determining an orientation (208) associated with a GNSS antenna (128) site and the position determined acoustically;
calculating an acoustically-derived position of the GNSS antenna site (128) using the orientation determined and the position determined acoustically; and
broadcasting the GNSS observation and the acoustically-derived position.

14. A method of determining a position, the method comprising:
the method of generating positioning reference data offshore as claimed in Claim 13;
receiving (500) the broadcast GNSS observation and the broadcast position at a position to be determined;
making a local GNSS observation (504) in respect of the position to be determined; and
using the received broadcast GNSS observation and the broadcast position with the local GNSS observation data to estimate (510) a relative position vector.

## Patentansprüche

1. Eine Offshore-GNSS-Referenzstationseinrichtung (102), aufweisend:
eine Verarbeitungseinheit (118);
ein drahtloses Kommunikationsmodul (120), das betriebsfähig mit der Verarbeitungseinheit (118) gekoppelt ist; und
einen GNSS-Antennenstandort; **gekennzeichnet dadurch, dass**
eine akustische Unterwasserkommunikationseinheit (115), die einen akustischen Unterwasserwandler (116) umfasst, wobei die akustische Unterwasserkommunikationseinheit (115) derart eingerichtet ist, dass sie mit der Verarbeitungseinheit (118) zusammenarbeitet, um im Gebrauch eine Position zu berechnen;
eine Orientierungsbestimmungseinheit (124), die funktionsfähig mit der Verarbeitungseinheit (118) gekoppelt ist, wobei die Orientierungsbestimmungseinheit (124) eingerichtet ist, um eine Orientierung zu bestimmen, die mit dem Standort der GNSS-Antenne (128) und dem akustischen Wandler (116) der akustischen Unterwasserkommunikationseinheit (115) verbunden ist;
die Verarbeitungseinheit (118) derart eingerichtet ist, dass sie eine akustisch abgeleitete Position des GNSS-Antennenstandorts unter Verwendung der berechneten Position und der bestimmten Ausrichtung berechnet; und
das drahtlose Kommunikationsmodul (120) derart eingerichtet ist, dass es empfangene GNSS-Beobachtungsdaten und die akustisch abgeleitete Position des GNSS-Antennenstandorts sendet.

2. Vorrichtung nach Anspruch 1, wobei die berechnete Position eine Position des akustischen Unterwasser-Wandlers (116) ist; und
die Verarbeitungseinheit (118) eingerichtet ist, einen Vektor zu berechnen, der sich zwischen der Position des akustischen Unterwasserwandlers (116) und der Position des GNSS-Antennenstandorts (128) erstreckt, wobei der Vektor unter Verwendung eines vorbestimmten Hebelarm-Offsets und der von der Orientierungsbestimmungseinheit (124) bestimmten Orientierung berechnet wird.

3. Vorrichtung nach Anspruch 2, wobei die Verarbeitungseinheit (118) so eingerichtet ist, dass sie die Position des Unterwasser-Schallwandlers (116) unter Verwendung des berechneten Vektors übersetzt, um eine Position des Standorts der GNSS-Antenne (128) zu erhalten, wobei die Position des Standorts der GNSS-Antenne (128) eine dreidimensionale Position des Standorts der GNSS-Antenne (128) in Bezug auf einen Meeresboden-Bezugsrahmen ist.

4. Vorrichtung nach einem der vorangehenden Ansprüche, ferner umfassend:
einen GNSS-Empfänger (122), der so eingerichtet ist, dass er GNSS-Signalbeobachtungen durchführt, die eine Pseudoentfernungsmessung und eine Trägerphasenmessung umfassen; wobei die Verarbeitungseinrichtung (118) so eingerichtet ist, dass sie von dem GNSS-Empfänger (122) erzeugte Daten, die die GNSS-Signalbeobachtungen darstellen, als GNSS-Beobachtungsdaten speichert.

5. Vorrichtung nach Anspruch 4, wobei die Verarbeitungsressource (118) so eingerichtet ist, dass sie die vom GNSS-Empfänger (122) erzeugten Daten, die die GNSS-Signalbeobachtungen darstellen, so modifiziert, dass sie Messungen entsprechen, die von einer vorbestimmten statischen Pseudobeobachtungsposition aus vorgenommen wurden, und die modifizierten Daten als GNSS-Beobachtungsdaten speichert.

6. Vorrichtung nach Anspruch 4, wenn sie von Anspruch 2 abhängt, wobei das drahtlose Kommunikationsmodul (120) so eingerichtet ist, dass es die GNSS-Beobachtungsdaten sendet.

7. Vorrichtung nach Anspruch 5, wobei das drahtlose Kommunikationsmodul (120) so eingerichtet ist, dass es modifizierte Daten und die vorbestimmte statische Pseudo-Beobachtungsposition sendet.

8. Vorrichtung nach Anspruch 4, wobei der GNSS-Empfänger (122) so angeordnet ist, dass er präzise Punktpositionierungsdaten empfängt; und
die Verarbeitungseinheit (118) angeordnet ist, um eine Verarbeitungseinheit für präzise Punktpositionierung zu unterstützen, wobei die Verarbeitungseinheit für präzise Punktpositionierung angeordnet ist, um die präzisen Punktpositionierungsdaten zu empfangen und die präzisen Punktpositionierungsdaten zu verwenden, um eine von GNSS abgeleitete Position des Standorts der GNSS-Antenne (128) zu berechnen.

9. Vorrichtung nach Anspruch 4, wobei der GNSS-Empfänger (122) eingerichtet ist, um punktgenaue Positionierungsdaten zu empfangen;
die Verarbeitungseinheit (118) angeordnet ist, um eine Verarbeitungseinheit für präzise Punktpositionierung zu unterstützen, wobei die Verarbeitungseinheit für präzise Punktpositionierung angeordnet ist, um die präzisen Punktpositionierungsdaten zu empfangen und die präzisen Punktpositionierungsdaten zu verwenden, um eine von GNSS abgeleitete Position des GNSS-Antennenstandorts (128) zu berechnen; und
die Verarbeitungseinheit (118) angeordnet ist, um einen Versatz zwischen der von GNSS abgeleiteten Position des Standorts der GNSS-Antenne (128), die unter Verwendung der präzisen Punktpositionierungsdaten berechnet wurde, und der Position des Standorts der GNSS-Antenne (128) zu berechnen.

10. Offshore-GNSS-Positionierungssystem, umfassend:
die Offshore-GNSS-Referenzstationsvorrichtung (102) nach einem der Ansprüche 1 bis 9; und
eine Vielzahl von akustischen Unterwasser-Referenztranspondern (106); wobei die akustische Unterwasser-Kommunikationseinheit (115) so angeordnet ist, dass sie eine jeweilige Zweiwege-Laufzeit in Bezug auf jeden der Vielzahl von akustischen Unterwasser-Referenztranspondern (106) misst.

11. System nach Anspruch 10, wobei die Verarbeitungseinheit (118) so eingerichtet ist, dass sie mit der akustischen Unterwasser-Kommunikationseinheit (115) zusammenarbeitet, um die Position des akustischen Wandlers (115) in Bezug auf die mehreren akustischen Unterwasser-Referenztransponder (106) zu schätzen.

12. System nach Anspruch 10, ferner umfassend:
eine umherwandernde GNSS-Vorrichtung (300), die so eingerichtet ist, dass sie die GNSS-Beobachtungsdaten und die Position des GNSS-Antennenstandorts in Bezug auf den durch die mehreren akustischen Unterwasser-Referenztransponder (106) definierten Referenzrahmen empfängt;
und die umherwandernde GNSS-Vorrichtung (300) angeordnet ist, um einen relativen Positionsvektor zu berechnen, der mit einer Position eines GNSS-Antennenstandorts (320) der umherwandernden GNSS-Vorrichtung (300) relativ zu der Position des GNSS-Antennenstandorts (320) der GNSS-Referenzstation (102) verbunden ist.

13. Verfahren zur Erzeugung von Positionsreferenzdaten auf hoher See, wobei das Verfahren Folgendes umfasst:
Bestimmen (200) einer Position akustisch durch das Wasser; und Durchführen einer GNSS-Beobachtung (204) in Bezug auf die Position; **gekennzeichnet dadurch, dass**:
Bestimmen einer Orientierung (208), die mit dem Standort einer GNSS-Antenne (128) und der akustisch bestimmten Position verbunden ist;
Berechnen einer akustisch abgeleiteten Position des GNSS-Antennenstandorts (128) unter Verwendung der bestimmten Ausrichtung und der akustisch bestimmten Position; und
Übertragen der GNSS-Beobachtung und der akustisch abgeleiteten Position.

14. Verfahren zur Bestimmung einer Position, wobei das Verfahren umfasst:
das Verfahren zur Erzeugung von Offshore-Positionsreferenzdaten nach Anspruch 13;
Empfangen (500) der gesendeten GNSS-Beobachtung und der gesendeten Position an einer zu bestimmenden Position;
Durchführen einer lokalen GNSS-Beobachtung (504) in Bezug auf die zu bestimmende Position;
und Verwenden der empfangenen Broadcast-GNSS-Beobachtung und der Broadcast-Position mit den lokalen GNSS-Beobachtungsdaten zum Schätzen (510) eines relativen Positionsvektors.

## Revendications

1. Appareil de station de référence GNSS en haute mer (102) qui comprend :
une ressource de traitement (118) ;
un module de communications sans fil (120) qui est couplé de manière opérationnelle à la ressource de traitement (118) ; et
un site d'une antenne GNSS ; **caractérisé par**
une unité de communication acoustique sous-marine (115) qui comprend un transducteur acoustique sous-marin (116), l'unité de communication acoustique sous-marine (115) étant conçue pour coopérer avec la ressource de traitement (118) dans le but de calculer, lorsqu'on l'utilise, une position ;
une unité de détermination d'une orientation (124) qui est couplée de manière opérationnelle à la ressource de traitement (118), l'unité de détermination d'une orientation (124) étant conçue pour déterminer une orientation qui est associée au site de l'antenne GNSS (128) et au transducteur acoustique (116) de l'unité de communication acoustique sous-marine (115) ;
la ressource de traitement (118) étant conçue pour calculerune position qui a été dérivée par voie acoustique du site de l'antenne GNSS en utilisant la position qui a été calculée et l'orientation qui a été déterminée ; et
le module de communications sans fil (120) étant conçu pour diffuser des données d'observation GNSS qui ont été reçues ainsi que la position qui a été dérivée par voie acoustique du site de l'antenne GNSS.

2. Appareil tel qu'il est revendiqué à la revendication 1, dans lequel
la position qui a été calculée représente une position du transducteur acoustique sous-marin (116) ; et
la ressource de traitement (118) est conçue pour calculer un vecteur qui s'étend entre la position du transducteur acoustique sous-marin (116) et la position du site de l'antenne GNSS (128), le vecteur étant calculé en utilisant un décalage prédéterminé du bras de levier et l'orientation qui a été déterminée par l'unité de détermination d'une orientation (124).

3. Appareil tel qu'il est revendiqué à la revendication 2, dans lequel la ressource de traitement (118) est conçue soumettre à une translation la position du transducteur acoustique sous-marin (116) en utilisant le vecteur qui a été calculé dans le but d'obtenir une position du site de l'antenne GNSS (128), la position du site de l'antenne GNSS (128) représentant une position en trois dimensions du site de l'antenne GNSS (128) par rapport à un cadre de référence au fond de la mer.

4. Appareil tel qu'il est revendiqué dans l'une quelconque des revendications précédentes, qui comprend en outre :
un récepteur GNSS (122) qui est conçu pour procéder à des observations de signaux GNSS comprenant la mesure d'une pseudodistance et la mesure d'une phase de porteuse ; dans lequel
la ressource de traitement (118) est conçue pour mettre en mémoire des données qui ont été générées par le récepteur GNSS (122) qui représentent les observations des signaux GNSS, à titre de données d'observation GNSS.

5. Appareil tel qu'il est revendiqué à la revendication 4, dans lequel la ressource de traitement (118) est conçue pour modifier les données qui ont été générées par le récepteur GNSS (122) qui représentent les observations des signaux GNSS de manière à établir une correspondance avec des mesures qui ont été réalisées à partir d'une position prédéterminée de pseudo-observation statique, et pour mettre en mémoire les données modifiées à titre de données d'observation GNSS.

6. Appareil tel qu'il est revendiqué à la revendication 4, lorsque celle-ci dépend de la revendication 2, dans lequel le module de communications sans fil (120) est conçu pour diffuser les données d'observation GNSS.

7. Appareil tel qu'il est revendiqué à la revendication 5, dans lequel le module de communications sans fil (120) est conçu pour diffuser des données qui ont été modifiées et la position de pseudo-observation statique qui a été prédéterminée.

8. Appareil tel qu'il est revendiqué à la revendication 4, dans lequel
le récepteur GNSS (122) est conçu pour recevoir des données de positionnement de points précis ; et
la ressource de traitement (118) est conçue pour supporter une unité de traitement de positionnement de points précis, l'unité de traitement de positionnement de points précis étant conçue pour recevoir les données de positionnement de points précis et pour utiliser les données de positionnement de points précis dans le but de calculer une position qui a été dérivée par GNSS du site de l'antenne GNSS (128).

9. Appareil tel qu'il est revendiqué à la revendication 4, dans lequel :
le récepteur GNSS (122) est conçu pour recevoir des données de positionnement de points précis ;
la ressource de traitement (128) est conçue pour supporter une unité de traitement de positionnement de points précis, l'unité de traitement de positionnement de points précis étant conçue pour recevoir les données de positionnement de points précis et pour utiliser les données de positionnement de points précis dans le but de calculer une position qui a été dérivée par GNSS du site de l'antenne GNSS (128) ; et
la ressource de traitement (118) est conçue pour calculer un décalage entre la position qui a été dérivée par GNSS du site de l'antenne GNSS (128) en utilisant les données de positionnement de points précis et la position du site de l'antenne GNSS (128).

10. Système de positionnement GNSS en haute mer, qui comprend :
l'appareil de station de référence GNSS en haute mer (102) tel qu'il est revendiqué dans l'une quelconque des revendications 1 à 9 ; et
un certain nombre de transpondeurs acoustiques sous-marins de référence (106) ; dans lequel
l'unité de communication acoustique sous-marine (115) est conçue pour mesurer un temps de parcours à double sens respectif par rapport à chacun desdits plusieurs transpondeurs acoustiques sous-marins de référence (106).

11. Système tel qu'il est revendiqué à la revendication 10, dans lequel la ressource de traitement (118) est conçue pour coopérer avec l'unité de communication acoustique sous-marine (115) dans le but d'estimer la position du transducteur acoustique (115) par rapport auxdits plusieurs transpondeurs acoustiques sous-marins de référence (106).

12. Système tel qu'il est revendiqué à la revendication 10, qui comprend en outre :
un appareil GNSS itinérant (300) qui est conçu pour recevoir les données d'observation GNSS ainsi que la position du site de l'antenne GNSS par rapport au cadre de référence qui a été défini par lesdits plusieurs transpondeurs acoustiques sous-marins de référence (106) ; et
l'appareil GNSS itinérant (300) est conçu pour calculer un vecteur de position relative qui est associé à une position d'un site de l'antenne GNSS (320) de l'appareil GNSS itinérant (300) par rapport à la position du site de l'antenne GNSS (320) de la station GNSS de référence (102).

13. Procédé destiné à générer des données de positionnement de référence en haute mer, le procédé comprenant le fait de :
déterminer (200) une position par voie acoustique à travers l'eau ; et
procéder à une observation GNSS (204) par rapport à la position ; **caractérisé par** le fait de :
déterminer une orientation (208) qui est associée à un site de l'antenne GNSS (128) et à la position qui a été déterminée par voie acoustique ;
calculer une position qui a été dérivée par voie acoustique du site de l'antenne GNSS (128) en utilisant l'orientation qui a été déterminée et la position qui a été déterminée par voie acoustique ; et
diffuser l'observation GNSS et la position qui a été dérivée par voie acoustique.

14. Procédé destiné à déterminer une position, le procédé comprenant :
le procédé destiné à générer des données de positionnement de référence en haute mer, tel qu'il a été revendiqué à la revendication 13 ;
le fait de recevoir (500) l'observation GNSS qui a été diffusée et la position qui a été diffusée, à une position qui doit être déterminée ;
le fait de procéder à une observation GNSS locale (504) par rapport à la position qui doit être déterminée ; et
le fait d'utiliser l'observation GNSS diffusée qui a été reçue, ainsi que la position qui a été diffusée avec les données locales d'observation GNSS dans le but d'estimer (510) un vecteur de position relative.
